# EUROPÄISCHE PATENTSCHRIFT

(11) **EP 2 355 312 B1**
(45) Veröffentlichungstag und Bekanntmachung des Hinweises auf die Patenterteilung: **12.08.2020**
(21) Anmeldenummer: 11153346.9
(22) Anmeldetag: 04.02.2011
(51) Int. Cl.: H02K 11/02, H04B 15/02

(54) **Entstöranordnung eines Stellglieds mit einem Elektromotor**
Suppressor assembly of an actuator with an electric motor
Dispositif d'antiparasitage d'un actionneur doté d'un moteur électrique

(30) Priorität: 05.02.2010 DE 102010007155
(43) Veröffentlichungstag der Anmeldung: 10.08.2011
(73) Patentinhaber: Vitesco Technologies GmbH, 30165 Hannover (DE)
(72) Erfinder: Köhler, Stefan, 60437 Frankfurt (DE); Wallrafen, Werner, 65719 Hofheim (DE)

(56) Entgegenhaltungen:
- DE-A1-102006 001 452
- DE-A1-102008 000 887
- DE-U1- 29 619 780

## Beschreibung

Die vorliegende Erfindung betrifft eine Entstöranordnung eines Stellglieds mit einem Elektromotor mit den Merkmalen des Oberbegriffes von Patentanspruch 1 sowie ein Kraftfahrzeug mit einer entsprechenden Entstöranordnung.

Eine Hochfrequenzentstörung von Elektromotoren, insbesondere von Gleichstromelektromotoren mit Bürstenkommutierung, verlangt immer mehr Aufwand, um sowohl aktuelle als auch zukünftige Normen zur elektromagnetischen Verträglichkeit (EMV) zu erfüllen. Dies gilt insbesondere im Hinblick auf eine Anzahl von für die Entstörung erforderlichen Bauteilen. Diese Anzahl an Bauteilen, die zum Erfüllen der jeweiligen Norm notwendig sind, führt daher oft zu Bauraumproblemen beispielsweise in einer entsprechenden Komponente. Dies wiederum führt zu höheren Herstellungskosten.

Zusätzlich sind Schutzmaßnahmen im Hinblick auf eine elektrostatische Entladung (ESD, electrostatic discharge) erforderlich, da weitere elektronische Bauteile angeschlossen sein können. Aus diesem Grund sind üblicherweise zusätzliche ESD-Schutzbauteile erforderlich.

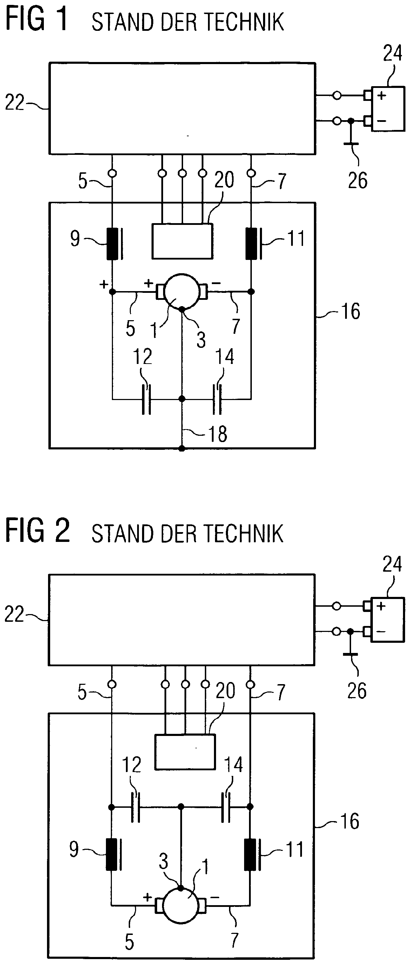

Bezug nehmend auf Fig. 1 wird eine bekannte Entstöranordnung eines Stellglieds mit einem Elektromotor erläutert. Der Elektromotor 1 ist in einem Gehäuse 16 eines Stellglieds aufgenommen, das in einem Kraftfahrzeug verwendet wird. Der Elektromotor 1 weist ein Elektromotorgehäuse 3 mit Elektromotorgehäuseanschluss sowie eine erste Anschlussleitung 5 und eine zweite Anschlussleitung 7 auf. In der ersten Anschlussleitung 5 ist eine erste Spule 9 angeordnet, und in der zweiten Anschlussleitung 7 ist eine zweite Spule 11 angeordnet. Die Spulen dienen insbesondere einer Hochfrequenzentstörung. Beispielsweise kann bei einem Elektromotor mit Bürstenkommutierung Bürstenfeuer entstehen, das hochfrequente Spannungen erzeugt. Diese hochfrequenten Spannungen können beispielsweise in einem Kraftfahrzeug Störungen im UKW-Bereich verursachen.

Weiterhin Bezug nehmend auf Fig. 1 ist die erste 5 und zweite Anschlussleitung 7 mit einem Steuergerät 22 verbunden. Das Steuergerät 22 wiederum ist mit einer Spannungsquelle 24 verbunden. Weiterhin ist eine Fahrzeugmasse 26 des Kraftfahrzeugs mit einer Leitung zwischen Versorgungsspannungsquelle 24 und Steuergerät 22 elektrisch verbunden.

Gemäß Fig. 1 ist außerdem ein erster Kondensator 12 in einer Leitung zwischen der ersten Anschlussleitung 5 sowie einer Verbindung zwischen dem Elektromotorgehäuse 3 und dem Gehäuse 16 angeordnet. Ein zweiter Kondensator 14 ist entsprechend in einer Leitung zwischen der zweiten Anschlussleitung 7 und der Verbindung zwischen dem Elektromotorgehäuse 3 und dem Gehäuse 16 angeordnet.

In Fig. 2 ist eine alternative Schaltanordnung des Beispiels aus Fig. 1 dargestellt. Im Unterschied zu der Ausführungsform gemäß Fig. 1 ist die Leitung, in der der erste Kondensator 12 angeordnet ist, hier mit der ersten Anschlussleitung 5 vor der ersten Spule 9 verbunden. Analog ist die Leitung, in der der zweite Kondensator 14 angeordnet ist, mit der zweiten Anschlussleitung 7 vor der zweiten Spule 11 verbunden. Die Leitung, in der der erste Kondensator 12 angeordnet ist, und die Leitung, in der der zweite Kondensator 14 angeordnet ist, ist über eine gemeinsame Leitung elektrisch mit dem Elektromotorgehäuse 3 verbunden.

Eine Vorrichtung zur Entstörung von Elektromotoren ist in US 4,795,951 beschrieben. Gemäß dieser Entstöranordnung ist in einer ersten Anschlussleitung eines Elektromotors eine erste Spule angeordnet und in einer zweiten Anschlussleitung des Elektromotors eine zweite Spule. Weiterhin weist die Vorrichtung zwei parallel zu den Motoranschlussleitungen geschaltete Kondensatoren auf, die mit einem Gehäuse verbunden sind. Darüber hinaus sind entweder zwei Zenerdioden oder ein Varistor parallel zu den Anschlussleitungen des Elektromotors geschaltet, ohne mit dem Gehäuse verbunden zu sein. Die Zenerdioden bzw. der Varistor werden in dieser Vorrichtung derart verschaltet, dass sie nur höhere Spannungsspitzen des Elektromotors gegenüber einer Entstöranordnung ohne Zenerdioden oder Varistor ableiten.

In DE 296 19 780 U1 ist eine weitere Entstöranordnung eines Elektromotors beschrieben. Hierbei werden ein Varistor und ein Kondensator parallel geschaltet und in einem Gehäuse vergossen.

Eine Vorrichtung zur Ableitung elektrostatischer Aufladungen, also zum Schutz vor elektrostatischen Entladungen (ESD), ist in DE 195 08 625 C1 beschrieben. Die Vorrichtung verwendet zwei hochohmige Widerstände. Jeder dieser zwei hochohmigen Widerstände verbindet eine Anschlussleitung des Elektromotors mit einem elektrisch leitfähigen Gehäuse.

Ein Nachteil der oben genannten Entstöranordnungen ist, dass sie teilweise nur einen Schutz vor elektrostatischen Entladungen oder nur eine Reduktion von hochfrequenten elektromagnetischen Feldern bereitstellen. Für den Fall, dass eine der obigen Anordnungen sowohl einen EMV-Schutz als auch einen ESD-Schutz bereitstellt, wird eine Vielzahl verschiedener Bauteile benötigt, was eine entsprechende Bauteilgröße erfordert. Darüber hinaus sind entsprechende Herstellkosten aufgrund der Vielzahl der erforderlichen Bauteile hoch.

Eine Vorrichtung zum Schutz einer elektronischen Schaltung sowohl vor ESD-Impulsen als auch vor EMV-Einstrahlungen ist in EP 1 440 230 B1 beschrieben. Hierin wird ein Varistor zum Schutz der elektronischen Schaltung in einer Leitung zwischen einem Metallgehäuse und einem Anschluss des elektronischen Bauteils angeordnet. In den Anschlussleitungen des Elektromotors sind jedoch keine Bauteile zur EMV-Abstrahlung (Entstörung) vorgesehen.

Eine Entstöranordnung mit den Merkmalen des Oberbegriffes von Patentanspruch 1 ist aus der DE 10 2006 001 452 A1 bekannt. Bei dieser bekannten Anordnung findet eine Parallelschaltung aus jeweils einer Kapazität (Dielektrika) und jeweils einem Varistor Verwendung.

Die Aufgabe der vorliegenden Erfindung ist daher die Optimierung einer Entstöranordnung eines Stellglieds mit einem Elektromotor im Vergleich zum Stand der Technik.

Die obige Aufgabe wird gelöst durch die kennzeichnenden Merkmale von Patentanspruch 1. Weitere vorteilhafte Ausführungsformen ergeben sich aus der folgenden Beschreibung, den Zeichnungen sowie den abhängigen Ansprüchen.

Eine Entstöranordnung eines Stellglieds mit einem Elektromotor umfasst das Stellglied und den Elektromotor mit einem mindestens teilweise elektrisch leitfähigen Elektromotorgehäuse sowie einer ersten und einer zweiten elektrischen Anschlussleitung, die eine elektrische Verbindung zwischen einer Spannungsquelle und dem Elektromotor bereitstellt, wobei das Elektromotorgehäuse mit einem zumindest teilweise elektrisch leitfähigen Teil des Stellglieds verbunden ist. Zudem umfasst die Entstöranordnung einen ersten und einen zweiten Varistor, während der erste Varistor einerseits mit der ersten Anschlussleitung und dem Elektromotorgehäuse und der zweite Varistor einerseits mit der zweiten Anschlussleitung und dem Elektromotorgehäuse elektrisch verbunden ist. Weiterhin ist das Elektromotorgehäuse über eine elektrische Verbindung mit einem zumindest teilweise elektrisch leitfähigen Teil des Stellglieds verbunden. Darüber hinaus sind der erste und zweite Varistor andererseits mit der elektrischen Verbindung verbunden. Auf diese Weise sind mittels der Kapazitäten des ersten und zweiten Varistors hochfrequente Spannungen ableitbar und es ist ein Schutz zumindest einer mit dem Elektromotor verbundenen elektrischen Komponente, insbesondere einer Elektronik und/oder einer Sensorik, vor elektrostatischen Aufladungen realisierbar.

Der Elektromotor des Stellglieds ist beispielsweise ein Gleichstromelektromotor, insbesondere mit Bürstenkommutierung. Der Elektromotor hat ein elektrisch leitfähiges Elektromotorgehäuse und eine erste sowie eine zweite elektrische Anschlussleitung. Mittels der ersten und zweiten elektrischen Anschlussleitung wird eine elektrische Verbindung zwischen einem Steuergerät und dem Elektromotor bereitgestellt. Das elektrisch leitfähige Teil des Stellglieds ist das Gehäuse des Stellglieds oder ein metallisierter Teilbereich am Stellglied.

Durch die Nutzung und Anordnung der Varistoren ist mit der Entstöranordnung eine Abstrahlung hochfrequenter elektromagnetischer Felder von dem Elektromotor vermeidbar oder zumindest reduzierbar. Dementsprechend ist sowohl ein ESD-Schutz der mit dem Elektromotor verbundenen elektrischen Komponente bereitgestellt und zusätzlich ein EMV-Schutz zur Reduzierung hochfrequenter Störungen gegeben.

Der erste und der zweite Varistor sind insbesondere im Hinblick auf ihre jeweilige Eigenkapazität aufeinander abgestimmt. Die jeweilige Eigenkapazität des ersten und zweiten Varistors ist so dimensioniert, dass mit dem ersten und dem zweiten Varistor hochfrequente Ströme abgeleitet werden können. Die hochfrequenten Ströme treten insbesondere aufgrund des Bürstenfeuers bei Verwendung eines Gleichstrommotors mit Bürstenkommutierung auf.

Bei der mit dem Elektromotor verbundenen elektrischen Komponente handelt es sich insbesondere um eine Elektronik oder eine Sensorik. Die Sensorik kann Sensoren, wie beispielsweise mindestens einen Positionssensor, aufweisen. Die Elektronik kann eine elektronische Steuerschaltung oder dergleichen umfassen.

Ein Vorteil der vorliegenden Erfindung ist, dass ein Schutz einer mit dem Elektromotor verbundenen elektrischen Komponente vor elektrostatischer Entladung (ESD-Schutz) und vor elektromagnetischer Strahlung, insbesondere vor hochfrequenten Strömen (EMV-Schutz), mittels des mit dem Elektromotor verbundenen ersten und zweiten Varistors realisierbar ist. Gegenüber dem Stand der Technik ist somit weder die Verwendung von Spulen, noch die Verwendung von Kondensatoren oder hochohmigen Widerständen erforderlich. Im Vergleich zu einem hochohmigen Widerstand weisen die Varistoren den weiteren Vorteil auf, dass keine Leckströme fließen, sofern eine Spannung einen vorgegebenen Wert nicht überschreitet. Lediglich bei einer Hochspannungsbeaufschlagung bei elektrostatischen Aufladungsvorgängen wirken der erste und zweite Varistor. Dies erfolgt im Vergleich zu einem hochohmigen Widerstand jedoch wesentlich leistungsfähiger.

In einer vorteilhaften Ausführungsform weist die Entstöranordnung eine erste Spule in der ersten Anschlussleitung und eine zweite Spule in der zweiten Anschlussleitung auf. Insbesondere ist der erste Varistor mit der ersten Anschlussleitung zwischen erster Spule und Elektromotor verbunden und der zweite Varistor mit der zweiten Anschlussleitung zwischen der zweiten Spule und dem Elektromotor. Mittels der ersten und zweiten Spule ist ein verbesserter Schutz der mit dem Elektromotor verbundenen elektrischen Bauteile insbesondere im Hinblick auf erweiterte Frequenzbereiche (EMV-Schutz) erzielbar.

Weiterhin bevorzugt ist, dass der erste und zweite Varistor jeweils eine Kapazität in einem Bereich von 100 pF bis 5 nF aufweist. Insbesondere bei der Verwendung der erfindungsgemäßen Entstöranordnung in einem Kraftfahrzeug stellt dieser Bereich einen zuverlässigen EMV-Schutz vor Störsignalen in einem ausgewählten Frequenzbereich dar. Der jeweilige Frequenzbereich kann in Abhängigkeit von einem Anwendungsfall oder Einsatzgebiet ausgewählt werden.

Weiterhin ist es vorteilhaft, wenn der Kapazitätsunterschied zwischen dem ersten und dem zweiten Varistor beispielsweise unter 20 % liegt. Auf diese Weise können der erste und zweite Varistor im Hinblick auf ihre Eigenkapazität aufeinander abgestimmt werden. Dies stellt einen weiteren verbesserten Schutz der mit dem Elektromotor verbunden elektrischen Komponente im Vergleich zu nicht aufeinander abgestimmten Varistoren einen EMV-Schutz vor symmetrischen Gleichtaktstörungen bereit.

Gemäß einer weiteren bevorzugten Ausführungsform werden der erste und zweite Varistor als ein Bauteil bereitgestellt bzw. in einem elektronischen Bauteil realisiert. In dieser Ausführungsform verfügt das Bauteil über drei Anschlüsse, wobei einer der Anschlüsse den gemeinsamen Masseanschluss der kombinierten Varistoren darstellt.

In einer weiteren Ausführungsform ist in dem Stellglied eine elektronische Schaltung angeordnet. Die elektronische Schaltung umfasst beispielsweise einen Positionssensor. Bei dem Positionssensor kann es sich um einen Positionssensor für eine Stellung einer Drosselklappe handeln.

Ein Kraftfahrzeug mit einer erfindungsgemäßen Entstöranordnung umfasst die erfindungsgemäße Entstöranordnung sowie ein Steuergerät, während die Entstöranordnung mit dem Steuergerät des Kraftfahrzeugs verbunden ist.

Ein Kraftfahrzeug mit der oben beschriebenen Entstöranordnung weist die oben im Hinblick auf die Entstöranordnung beschriebenen Vorteile auf. Auf diese Weise kann eine Beeinflussung elektrischer Komponenten in dem Kraftfahrzeug, die mit dem Elektromotor verbunden sind, verringert werden.

In einer bevorzugten Ausführungsform weisen der erste und zweite Varistor in der Entstöranordnung eine Knickspannung auf, die über einer Versorgungsspannung des Kraftfahrzeugs liegt. Die herkömmliche Versorgungsspannung liegt insbesondere unter oder ist gleich 24 V. In diesem Fall beträgt die Knickspannung des ersten und zweiten Varistors mehr oder ist gleich 30 V.

Im Folgenden wird die vorliegende Erfindung anhand einer Ausführungsform detailliert unter Bezugnahme auf die Zeichnungen beschrieben. Gleiche Bezugszeichen in den Zeichnungen bezeichnen jeweils gleiche Elemente. Es zeigen:
- Fig. 1: eine erste Ausführungsform Entstöranordnung eines Stellglieds mit einem Elektromotor gemäß Stand der Technik,
- Fig. 2: eine zweite Ausführungsform einer Entstöranordnung eines Stellglieds mit einem Elektromotor gemäß Stand der Technik,
- Fig. 3: eine erste Ausführungsform einer erfindungsgemäßen Entstöranordnung eines Stellglieds mit einem Elektromotor und Varistoren,
- Fig. 4: eine zweite Ausführungsform einer erfindungsgemäßen Entstöranordnung eines Stellglieds mit einem Elektromotor, Varistoren und Spulen und
- Fig. 5: eine dritte Ausführungsform einer erfindungsgemäßen Entstöranordnung eines Stellglieds mit einem Elektromotor und Varistoren und Spulen.

Die erfindungsgemäße Entstöranordnung wird im Folgenden anhand eines Einsatzes in einem Kraftfahrzeug beschrieben. Allerdings ist die erfindungsgemäße Entstöranordnung nicht auf die Verwendung in Kraftfahrzeugen beschränkt, sondern kann überall dort verwendet werden, wo eine besonders hohe Zuverlässigkeit bei der Entstörung eines Stellglieds mit einem Elektromotor erforderlich ist.

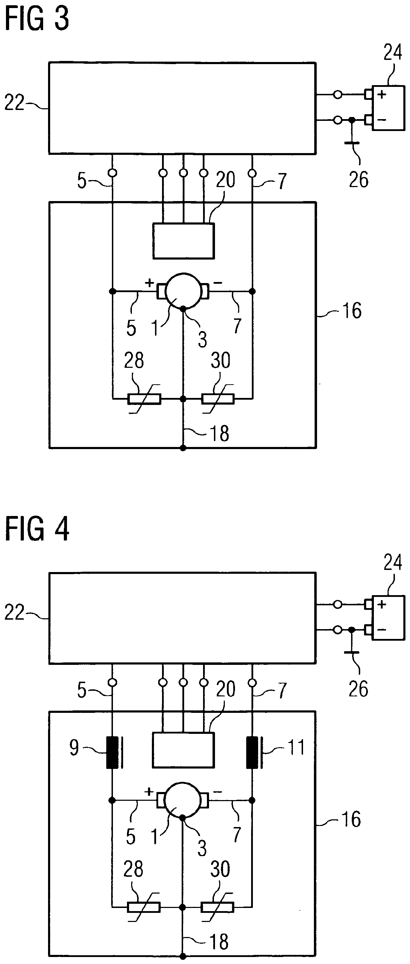

Bezug nehmend auf Fig. 3 weist die erfindungsgemäße Entstöranordnung einen Elektromotor 1 auf. Der Elektromotor 1 hat ein Elektromotorgehäuse 3 mit Elektromotorgehäuseanschluss, wobei das Elektromotorgehäuse 3 elektrisch leitfähig ist. Beispielsweise ist das Elektromotorgehäuse 3 metallisch. Bei dem Elektromotor 1 handelt es sich insbesondere um einen Gleichstromelektromotor, beispielsweise mit Bürstenkommutierung.

Das Elektromotorgehäuse 3 ist über eine elektrische Verbindung 18 mit einem zumindest teilweise elektrisch leitfähigen Teil des Stellglieds verbunden. Gemäß Fig. 3 ist dies ein Gehäuse 16 des Stellglieds.

Weiterhin weist die Entstöranordnung einen ersten Varistor 28 und einen zweiten Varistor 30 auf. Der erste Varistor 28 ist mit einer ersten Anschlussleitung 5 des Elektromotors 1 und dem Elektromotorgehäuse 3 verbunden, beispielsweise über die elektrische Verbindung 18. Der zweite Varistor 30 ist analog mit einer zweiten Anschlussleitung 7 des Elektromotors 1 und dem Elektromotorgehäuse 3 verbunden, hier ebenfalls über die elektrische Verbindung 18. Weiterhin sind der erste 28 und zweite Varistor 30 mit der elektrischen Verbindung 18 verbunden.

Bei der mit dem Elektromotor verbundenen elektrischen Komponente kann es sich um Elektronik und/oder Sensorik handeln. Beispielsweise ist in dem Gehäuse 16 eine elektronische Schaltung 20 aufgenommen, die allgemein als Elektronik bezeichnet wird. Die elektronische Schaltung 20 umfasst beispielsweise einen Positionssensor einer Drosselklappe, während der Positionssensor und alle denkbaren Sensoren allgemein mit Sensorik bezeichnet werden.

Sowohl die elektronische Schaltung 20 als auch der Elektromotor 1 sind mit einem Steuergerät 22 eines Kraftfahrzeugs verbunden. Das Steuergerät 22 stellt eine Spannungsversorgung des Elektromotors 1 mittels einer Versorgungsspannungsquelle 24, insbesondere einer Fahrzeugbatterie, bereit. Eine Leitung von der Versorgungsspannungsquelle 24 zum Steuergerät 22 ist mit einem Motorblock bzw. einer Fahrzeugmasse 26 verbunden.

Der erste 28 und der zweite Varistor 30 weist jeweils eine Kapazität in einem Bereich von 100 pF bis 5 nF auf. Ein Unterschied zwischen den Eigenkapazitäten des ersten und zweiten Varistors liegt vorzugsweise unter 20 %. Auf diese Weise ist während eines Betriebs des Elektromotors 1 ein besonders effizienter EMV-Schutz realisierbar.

Die vorliegende erfindungsgemäße Entstöranordnung des Stellglieds mit einem Elektromotor 1 stellt somit einen im Vergleich zum Stand der Technik einfacheren Filter für hochfrequente elektromagnetische Strahlung sowie eine Anordnung zur Ableitung von elektrostatischen Entladungen bereit. Aufgrund der oben beschriebenen Entstöranordnung können daher die von dem Elektromotor 1 im Betrieb erzeugten hochfrequenten elektrischen Ströme durch den ersten 28 und zweiten Varistor 30 abgeleitet werden. Dies geschieht insbesondere aufgrund der parasitären Parallel-Kapazität (Eigenkapazität) des ersten und zweiten Varistors. Somit wird der Schutz der mit dem Elektromotor verbundenen elektrischen Komponente ausschließlich mittels des ersten und zweiten Varistors erreicht. Daher sind insbesondere keine Spulen, Kondensatoren, hochohmigen Widerstände oder sonstige Bauteile zur Entstörung erforderlich, können aber ergänzend dazu genutzt werden.

In einer zweiten Ausführungsform gemäß Fig. 4 weist der Elektromotor 1 weiterhin eine in der ersten Anschlussleitung 5 angeordnete erste Spule 9 auf. Weiterhin weist der Elektromotor 1 eine in der zweiten Anschlussleitung 7 angeordnete zweite Spule 11 auf. Mittels der ersten 9 und zweiten Spule 11 wird ein verbesserter EMV-Schutz für eine mit dem Elektromotor 1 verbundene elektrische Komponente bereitgestellt. Insbesondere wird eine weitere Reduzierung der Abstrahlung ermöglicht und/oder ein breiterer Frequenzbereich der Abstrahlung abgedeckt.

Der erste Varistor 28 ist in dieser Ausführungsform mit der ersten Anschlussleitung 5 zwischen der ersten Spule 9 und dem Elektromotor 1 verbunden. Analog ist der zweite Varistor 30 mit der zweiten Anschlussleitung 7 zwischen dem Elektromotor 1 und der zweiten Spule 11 verbunden.

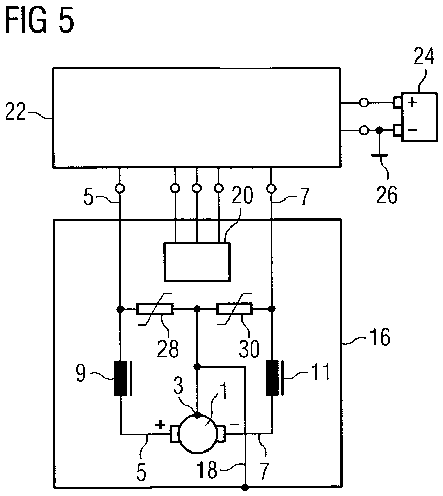

Fig. 5 stellt eine dritte Ausführungsform der erfindungsgemäßen Entstöranordnung dar. Ein Unterschied zu der Entstöranordnung gemäß Fig. 4 liegt darin, dass der erste 28 und der zweite Varistor 30 jeweils vor der ersten 9 bzw. zweiten Spule 11 in die erste 5 bzw. zweite Anschlussleitung 7 eingebunden ist.

## Patentansprüche

1. Entstöranordnung eines Stellglieds mit einem Elektromotor (1), umfassend:
a) das Stellglied und den Elektromotor (1) mit einem mindestens teilweise elektrisch leitfähigen Elektromotorgehäuse (3) sowie einer ersten (5) und einer zweiten elektrischen Anschlussleitung (7), die eine elektrische Verbindung zwischen einer Spannungsquelle (24) und dem Elektromotor (1) bereitstellen,
b) einen ersten (28) und einen zweiten Varistor (30), wobei
c) der erste Varistor (28) einerseits mit der ersten Anschlussleitung (5) und dem Elektromotorgehäuse (3) und der zweite Varistor (30) einerseits mit der zweiten Anschlussleitung (7) und dem Elektromotorgehäuse (3) elektrisch verbunden sind,
**dadurch gekennzeichnet, dass** das Elektromotorgehäuse (3) über eine elektrische Verbindung (18) mit einem zumindest teilweise elektrisch leitfähigen Teil des Stellgliedes, welches ein Gehäuse (16) des Stellglieds oder einen metallisierten Teilbereich an dem Stellglied ausbildet, verbunden ist und dass der erste (28) und zweite (30) Varistor andererseits mit der elektrischen Verbindung (18) verbunden sind, sodass mittels der Kapazitäten des ersten (28) und zweiten (30) Varistors hochfrequente Spannungen ableitbar sind.

2. Entstöranordnung nach Anspruch 1, **dadurch gekennzeichnet, dass** sie eine erste Spule (9) in der ersten Anschlussleitung (5) und eine zweite Spule (11) in der zweiten Anschlussleitung (7) aufweist.

3. Entstöranordnung nach Anspruch 2, **dadurch gekennzeichnet, dass** der erste Varistor (28) mit der ersten Anschlussleitung (5) zwischen erster Spule (9) und Elektromotor (1) verbunden ist und der zweite Varistor (30) mit der zweiten Anschlussleitung (7) zwischen der zweiten Spule (11) und dem Elektromotor (1) verbunden ist.

4. Entstöranordnung nach einem der vorhergehenden Ansprüche, **dadurch gekennzeichne**t, dass deren Elektromotor (1) ein Gleichstromelektromotor ist, insbesondere mit Bürstenkommutierung.

5. Entstöranordnung nach einem der vorhergehenden Ansprüche, **dadurch gekennzeichnet, dass** deren erster (28) und zweiter Varistor (30) jeweils eine Kapazität in einem Bereich von 100 pF bis 5 nF aufweist.

6. Entstöranordnung nach einem der vorhergehenden Ansprüche, **dadurch gekennzeichnet, dass** der Kapazitätsunterschied zwischen dem ersten (28) und dem zweiten Varistor (30) unter 20 % liegt.

7. Entstöranordnung nach einem der vorhergehenden Ansprüche, **dadurch gekennzeichnet, dass** der erste (28) und zweite Varistor (30) in einem elektronischen Bauteil zusammengefasst sind, das entsprechend drei elektrische Anschlüsse aufweist.

8. Kraftfahrzeug mit einer Entstöranordnung nach einem der Ansprüche 1 bis 7, **dadurch gekennzeichnet, dass** die Entstöranordnung mit einem Steuergerät (22) des Kraftfahrzeugs verbunden ist.

9. Kraftfahrzeug nach Anspruch 8, **dadurch gekennzeichnet, dass** der erste (28) und zweite Varistor (30) in der Entstöranordnung eine Knickspannung aufweisen, die über einer Versorgungsspannung des Kraftfahrzeugs liegt.

10. Kraftfahrzeug nach Anspruch 9, **dadurch gekennzeichnet, dass** dessen herkömmliche Versorgungsspannung kleiner oder gleich 24 V ist, während die Knickspannung des ersten (28) und zweiten Varistors (30) größer oder gleich 30 V ist.

## Claims

1. Interference-suppression arrangement of an actuating element having an electric motor (1), comprising:
a) the actuating element and the electric motor (1) with an at least partially electrically conductive electric motor housing (3) and a first electrical connection line (5) and a second electrical connection line (7) which provide an electrical connection between a voltage source (24) and the electric motor (1),
b) a first varistor (28) and a second varistor (30), wherein
c) the first varistor (28) is electrically connected at one end to the first connection line (5) and the electric motor housing (3), and the second varistor (30) is electrically connected at one end to the second connection line (7) and the electric motor housing (3),
**characterized in that** the electric motor housing (3) is connected to an at least partially electrically conductive portion of the actuating element, which portion forms a housing (16) of the actuating element or a metallized subregion on the actuating element, via an electrical connection (18), and **in that** the first varistor (28) and the second varistor (30) are connected at the other end to the electrical connection (18), so that high-frequency voltages can be discharged by means of the capacitances of the first varistor (28) and the second varistor (30).

2. Interference-suppression arrangement according to Claim 1, **characterized in that** it has a first coil (9) in the first connection line (5) and a second coil (11) in the second connection line (7).

3. Interference-suppression arrangement according to Claim 2, **characterized in that** the first varistor (28) is connected to the connection first connection line (5) between the first coil (9) and the electric motor (1), and the second varistor (30) is connected to the second connection line (7) between the second coil (11) and the electric motor (1).

4. Interference-suppression arrangement according to one of the preceding claims, **characterized in that** its electric motor (1) is a DC electric motor, in particular with brush commutation.

5. Interference-suppression arrangement according to one of the preceding claims, **characterized in that** its first varistor (28) and its second varistor (30) each have a capacitance in a range of from 100 pF to 5 nF.

6. Interference-suppression arrangement according to one of the preceding claims, **characterized in that** the difference in capacitance between the first varistor (28) and the second varistor (30) lies below 20%.

7. Interference-suppression arrangement according to one of the preceding claims, **characterized in that** the first varistor (28) and the second varistor (30) are combined in one electronic component which accordingly has three electrical connections.

8. Motor vehicle comprising an interference-suppression arrangement according to one of Claims 1 to 7, **characterized in that** the interference-suppression arrangement is connected to a controller (22) of the motor vehicle.

9. Motor vehicle according to Claim 8, **characterized in that** the first varistor (28) and the second varistor (30) in the interference-suppression arrangement have a kink voltage which lies above a supply voltage of the motor vehicle.

10. Motor vehicle according to Claim 9, **characterized in that** its conventional supply voltage is less than or equal to 24 V, while the kink voltage of the first varistor (28) and of the second varistor (30) is greater than or equal to 30 V.

## Revendications

1. Arrangement d'antiparasitage d'un actionneur comprenant un moteur électrique (1), comprenant :
a) l'actionneur et le moteur électrique (1) pourvus d'un carter de moteur électrique (3) au moins partiellement conducteur d'électricité ainsi qu'une première (5) et une deuxième ligne de raccordement (7) électrique, qui fournissent une liaison électrique entre une source de tension (24) et le moteur électrique (1),
b) une première (28) et une deuxième varistance (30),
c) la première varistance (28) étant reliée électriquement d'une part à la première ligne de raccordement (5) et au carter de moteur électrique (3) et la deuxième varistance (30) d'une part à la deuxième ligne de raccordement (7) et au carter de moteur électrique (3),
**caractérisé en ce que** le carter de moteur électrique (3) est relié par le biais d'une liaison électrique (18) à une partie au moins partiellement conductrice d'électricité de l'actionneur, laquelle forme un boîtier (16) de l'actionneur ou une zone partielle métallisée sur l'actionneur, et **en ce que** la première (28) et la deuxième varistance (30) sont d'autre part reliées à la liaison électrique (18), de sorte que des tensions à haute fréquence peuvent être dérivées au moyen des capacités de la première (28) et de la deuxième varistance (30).

2. Arrangement d'antiparasitage selon la revendication 1, **caractérisé en ce qu'**il comporte une première bobine (9) dans la première ligne de raccordement (5) et une deuxième bobine (11) dans la deuxième ligne de raccordement (7).

3. Arrangement d'antiparasitage selon la revendication 2, **caractérisé en ce que** la première varistance (28) est reliée à la première ligne de raccordement (5) entre la première bobine (9) et le moteur électrique (1) et la deuxième varistance (30) est reliée à la deuxième ligne de raccordement (7) entre la deuxième bobine (11) et le moteur électrique (1).

4. Arrangement d'antiparasitage selon l'une des revendications précédentes, **caractérisé en ce que** son moteur électrique (1) est un moteur à courant continu, notamment avec collecteur à balais.

5. Arrangement d'antiparasitage selon l'une des revendications précédentes, **caractérisé en ce que** sa première (28) et sa deuxième varistance (30) présentent respectivement une capacité dans une plage de 100 pF à 5 nF.

6. Arrangement d'antiparasitage selon l'une des revendications précédentes, **caractérisé en ce que** la différence de capacité entre la première (28) et la deuxième varistance (30) est inférieure à 20 %.

7. Arrangement d'antiparasitage selon l'une des revendications précédentes, **caractérisé en ce que** la première (28) et la deuxième varistance (30) sont regroupées en un composant électronique qui possède en conséquence trois bornes électriques.

8. Véhicule automobile comprenant un arrangement d'antiparasitage selon l'une des revendications 1 à 7, **caractérisé en ce que** l'arrangement d'antiparasitage est relié à un contrôleur (22) du véhicule automobile.

9. Véhicule automobile selon la revendication 8, **caractérisé en ce que** la première (28) et la deuxième varistance (30) dans l'arrangement d'antiparasitage présentent une tension de coude qui est supérieure à une tension d'alimentation du véhicule automobile.

10. Véhicule automobile selon la revendication 9, **caractérisé en ce que** sa tension d'alimentation habituelle est inférieure ou égale à 24 V, alors que la tension de coude de la première (28) et de la deuxième varistance (30) est égale ou supérieure à 30 V.
